# FASCICULE DE BREVET EUROPEEN

(11) **EP 2 232 273 B1**
(45) Date de publication et mention de la délivrance du brevet: **16.05.2018**
(21) Numéro de dépôt: 08872652.6
(22) Date de dépôt: 19.12.2008
(51) Int. Cl.: G01C 19/5691, G01C 25/00, G01P 15/13

(54) **PROCEDE DE CORRECTION DE GAIN D'UN ORGANE CAPACITIF ET DISPOSITIF DE MISE EN OEUVRE**
VERFAHREN ZUM KORRIGIEREN DER VERSTÄRKUNG EINER KAPAZITIVEN EINHEIT UND VORRICHTUNG ZU DESSEN UMSETZUNG
METHOD OF CORRECTING THE GAIN OF A CAPACITIVE UNIT AND DEVICE FOR IMPLEMENTING SAME

(30) Priorité: 19.12.2007 FR 0708907
(43) Date de publication de la demande: 29.09.2010
(73) Titulaire: Safran Electronics & Defense, 92100 Boulogne-Billancourt (FR)
(72) Inventeur: CARON, Jean-Michel, 92100 BOULOGNE-BILLANCOURT (FR); RAGOT, Vincent, 92100 BOULOGNE-BILLANCOURT (FR)
(74) Mandataire: Lavialle, Bruno François Stéphane
(86) Numéro de dépôt international: PCT/FR2008/001791
(87) Numéro de publication internationale: WO 2009/103900

(56) Documents cités:
- WO-A-2006/074119
- US-A- 5 440 939
- US-A- 6 035 694
- US-A1- 2003 006 783

## Description

La présente invention concerne un procédé de correction de gain d'un organe capacitif et un dispositif de mise en oeuvre de ce procédé.

### ARRIERE PLAN DE L'INVENTION

On connaît de nombreux dispositifs comportant un organe capacitif pour la détection ou la commande de la distance entre deux parties du dispositif mobiles l'une par rapport à l'autre. En particulier, on sait que des organes capacitifs sont utilisés pour la détection et la commande des déformations d'un résonateur mécanique dans un gyroscope vibrant, notamment un gyroscope vibrant axisymétrique. Lorsqu'ils sont utilisés en mode gyroscopique ces dispositifs présentent l'avantage de disposer d'un facteur d'échelle (coefficient de Bryan) de très grande stabilité.

Dans le mode gyroscopique, la vibration est libre et son plan tourne autour de l'axe du résonateur en fonction des mouvements du porteur. Pour bénéficier des avantages de ce mode Il est indispensable de connaître la position précise de la vibration par rapport au boîtier de l'appareil pour appliquer des signaux de commande permettant d'entretenir le mouvement de la vibration. Toute erreur dans la mesure de la position de la vibration crée une erreur dans la direction de la force appliquée et génère donc une dérive parasite du gyroscope.

De nombreuses tentatives ont été faites pour corriger ou tenir compte d'erreurs intervenant dans des mesures accélérométriques. Les documents US-A-2003/006 783 et US-A-6 035 694 visent ainsi à atténuer un biais de mesure provoqué par des capacités parasites sensiblement constantes. Le document US 5,440,939 décrit un procédé pour réduire l'influence d'un champ parasite existant entre les électrodes d'un capteur capacitif sur le gain de ce capteur.

### OBJET DE L'INVENTION

Le fonctionnement du gyroscope, tant en détection qu'en commande, fait intervenir le gain de l'organe capacitif c'est-à-dire le rapport entre la distance entre les électrodes de l'organe capacitif d'une part, et l'amplitude du signal électrique aux bornes de l'organe capacitif d'autre part. L'amplitude du signal aux bornes de l'organe capacitif lorsqu'il est utilisé en détecteur et la distance entre les électrodes lorsqu'il est utilisé en commande, sont en outre fonction d'une tension de polarisation continue appliquée à l'une des électrodes. Des expérimentations ayant conduit à l'invention montrent que le gain de l'organe capacitif est influencé par un champ rémanent qui subsiste même lors de l'interruption de la tension de polarisation. On estime que ce champ rémanent résulte d'impuretés dans la masse ou dans la surface des électrodes, et est généré par la tension de polarisation lorsque celle-ci est appliquée. Alors que la tension de polarisation nominale c'est-à-dire la tension de polarisation appliquée à l'organe capacitif dans la phase de détection ou de commande, est de l'ordre de plusieurs centaines de volts, typiquement entre 200 volts et 400 volts, le champ rémanent qui en résulte est équivalent à une tension de polarisation de quelques volts. Ce champ rémanent engendre une erreur de gain lentement variable.

Un but de l'invention est de proposer un procédé et un dispositif permettant d'éliminer les effets du champ rémanent.

### RESUME DE L'INVENTION

En vue de la réalisation de ce but, on propose selon l'invention un procédé de correction de gain d'un organe capacitif comprenant des électrodes mobiles l'une par rapport à l'autre et entre lesquelles un champ rémanent est établi, le procédé comportant les étapes :
- d'appliquer à l'une des électrodes une tension de polarisation continue réduite ayant une valeur inférieure à un seuil pour lequel un champ rémanent généré par cette tension de polarisation réduite pourrait être mesuré,
- d'effectuer une mesure d'un signal de sortie de l'organe capacitif,
- et d'effectuer une correction du gain de l'organe capacitif en fonction du signal de sortie mesuré.

Le signal de sortie de l'organe capacitif comprend alors deux composantes qui s'additionnent: une première composante résultant d'une tension de polarisation équivalente au champ rémanent présent, et une deuxième composante résultant directement de la tension de polarisation réduite. La composante du signal de sortie résultant directement de la tension de polarisation réduite peut être calculée à partir de cette tension de polarisation et du gain avant correction de l'organe capacitif. La composante du signal de sortie résultant du champ rémanent peut donc être extraite du signal de sortie. Cette composante permet de calculer l'erreur de gain que le champ rémanent entraîne lors de l'utilisation de l'organe capacitif pour le fonctionnement du dispositif auquel il est associé.

Selon une version avantageuse de l'invention, la tension de polarisation réduite est supérieure à une tension de polarisation estimée équivalente au champ rémanent. Ainsi, le signal de sortie de l'organe capacitif a un signe constant quelle que soit la direction du champ rémanent et la valeur absolue du signal de sortie permet alors de déterminer la direction du champ rémanent selon que cette valeur absolue est supérieure ou inférieure à l'amplitude de la tension de polarisation réduite.

De préférence, le procédé comporte les étapes d'effectuer successivement deux mesures du signal de sortie à partir de tensions de polarisation réduites de même valeur mais de signes opposés et d'effectuer une moyenne des signaux de sortie obtenus. Ainsi, on élimine les composantes du signal de sortie résultant des tensions de polarisation réduite, ce qui permet d'utiliser la moyenne des signaux de sortie de l'organe capacitif pour la correction de gain sans avoir à tenir compte de l'amplitude des signaux de polarisation réduite. L'invention comporte également un dispositif comme défini dans la revendication 9. Selon un mode de mise en oeuvre préféré du procédé selon l'invention, celui-ci comporte une étape préalable d'appliquer ponctuellement à l'organe capacitif un signal de polarisation nominale. On s'assure ainsi que le champ rémanent mesuré lors de la mise en oeuvre du procédé de correction de gain a une valeur identique à sa valeur lors du fonctionnement du dispositif auquel l'organe capacitif est associé.

### BREVE DESCRIPTION DES DESSINS

D'autres caractéristiques et avantages de l'invention apparaîtront à la lecture de la description qui suit d'un mode de mise en oeuvre particulier non limitatifs de l'invention, en référence aux figures ci-jointes parmi lesquelles :
- la figure 1 est une vue en coupe axiale schématique selon la ligne I-I de la figure 2 d'un capteur vibrant à cloche hémisphérique,
- la figure 2 est une vue en coupe selon la ligne II-II de la figure 1,
- la figure 3 est un schéma par bloc illustrant un exemple de mise en oeuvre du procédé de l'invention dans une phase d'initialisation,
- la figure 4 est un schéma par bloc illustrant un premier exemple de mise en oeuvre du procédé de l'invention dans une phase de fonctionnement du dispositif auquel l'organe capacitif est associé,
- la figure 5 est un schéma illustrant l'amplitude de la tension de polarisation équivalente au champ rémanent, la tension de polarisation réduite,et la tension équivalente totale obtenue pour deux tensions de polarisation réduites de mêmes valeurs mais de signes opposés,
- la figure 6 est un schéma par bloc illustrant un second exemple de mise en oeuvre du procédé de l'invention dans une phase de fonctionnement du dispositif auquel l'organe capacitif est associé.

### DESCRIPTION DETAILLEE DE L'INVENTION

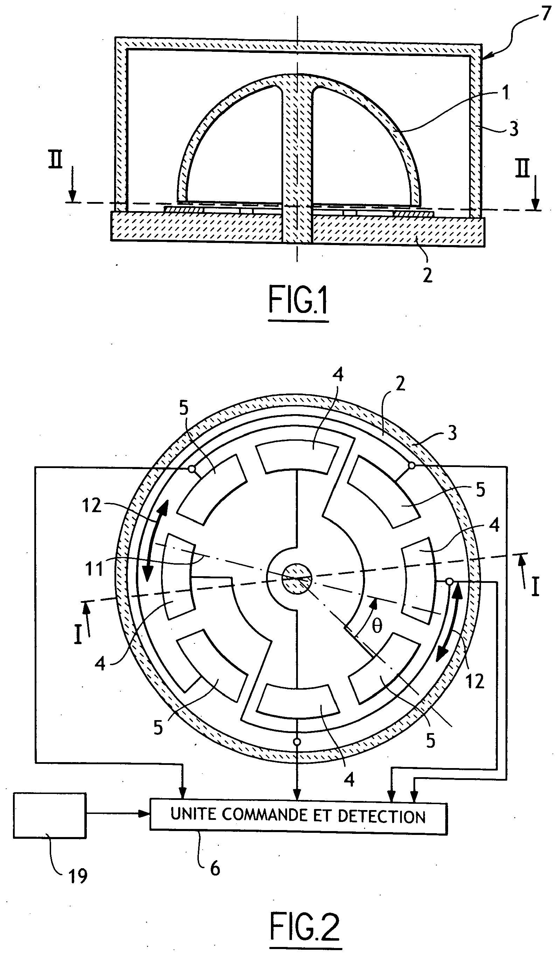

En référence aux figures 1 et 2, l'invention est illustrée en relation avec un capteur vibrant 7 à cloche hémisphérique comprenant de façon connue en soi une cloche en silice 1 montée sur une embase 2 également en silice, la cloche 1 étant entourée d'un boîtier étanche 3 permettant de mettre le capteur sous vide.

Egalement de façon connue en soi, la surface interne de la cloche 1 est métallisée ainsi que son bord inférieur et celui-ci s'étend en regard de deux paires d'électrodes de commande 4 et de deux paires d'électrodes de détection 5. Le bord inférieur métallisé de la cloche 1 et chaque électrode en regard forment des organes capacitifs convenablement reliés à une unité de commande et de détection 6 pour générer une vibration contenue dans un plan passant par l'axe de la cloche hémisphérique et dont la position est repérée par un angle Θ par rapport à une électrode de référence 5. La position de la vibration est commandée par l'unité de commande 6 en appliquant aux électrodes de commande 4 une commande de précession.

Le champ rémanent résultant de l'application de la tension de polarisation continue à la couche métallique de la cloche 1 est variable non seulement en fonction des temps et de la température, mais également en fonction de l'orientation du plan contenant la vibration.

Afin d'effectuer une correction actualisée du gain de chaque organe capacitif, le procédé selon l'invention comporte de préférence une phase d'initialisation qui est mise en oeuvre selon une périodicité qui est fonction de la durée de maintien du champ rémanent après une interruption de la tension de polarisation nominale. Cette durée de maintien peut être de quelques heures à quelques jours. Une phase d'application de la correction est ensuite mise en oeuvre lors de l'utilisation du dispositif auquel l'organe capacitif est associé.

De préférence la phase d'initialisation est mise en oeuvre juste avant une mise en oeuvre de la phase d'application de la correction, par exemple juste avant le départ en vol d'un avion sur lequel le capteur vibrant est monté.

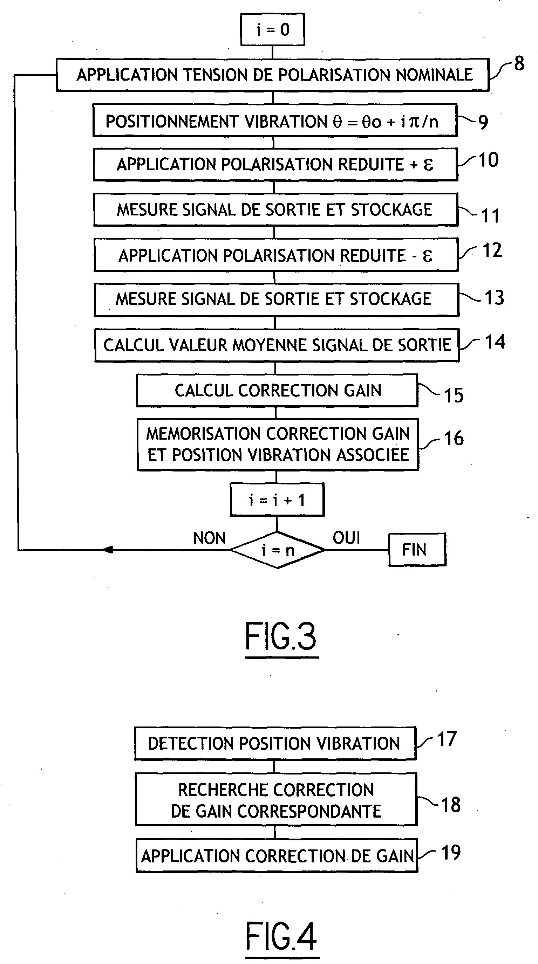

La figure 3 illustre un mode de mise en oeuvre préféré de la phase d'initialisation. Dans ce mode de mise en oeuvre préféré, le procédé comporte une étape 8 d'application ponctuelle de la tension de polarisation nominale, c'est-à-dire la tension de polarisation qui est appliquée lors de l'utilisation du gyroscope. Dans les cas les plus courants, la tension de polarisation nominale est comprise entre 200 volts et 400 volts. Le procédé comporte ensuite une étape 9 de positionnement de la vibration, tout d'abord selon un angle Θ0 par rapport à l'électrode de référence. Dans cette position, le procédé comporte une étape 10 d'application d'une tension de polarisation + ε continue réduite ayant une valeur inférieure à un seuil pour lequel un champ rémanent généré par cette tension de polarisation réduite pourrait être mesuré. La valeur de la tension de polarisation réduite + ε est en outre supérieure à la tension de polarisation VE équivalente au champ rémanent. On notera à ce propos qu'une tension de polarisation nominale de 200 volts à 400 volts génère un champ rémanent dont la tension de polarisation équivalente est de l'ordre de quelques volts. La tension de polarisation réduite ε peut donc elle-même être de l'ordre de quelques volts tout en étant supérieure à la tension équivalente au champ rémanent.

La tension de polarisation équivalente VE peut être estimée à partir des données techniques de l'organe capacitif. Cette tension de polarisation équivalente peut également être estimée en faisant une mesure du signal de sortie sans appliquer de tension de polarisation réduite. En pratique on peut fixer arbitrairement la valeur de la tension de polarisation réduite à 10 volts.

En revanche, du fait de sa faible valeur la tension de polarisation réduite génère un champ rémanent de valeur négligeable (équivalent à une tension de polarisation de l'ordre de quelques centièmes de volts).
La composante du signal de sortie correspondant au champ rémanent résulte donc seulement du champ rémanent généré par l'application initiale de la tension de polarisation nominale.

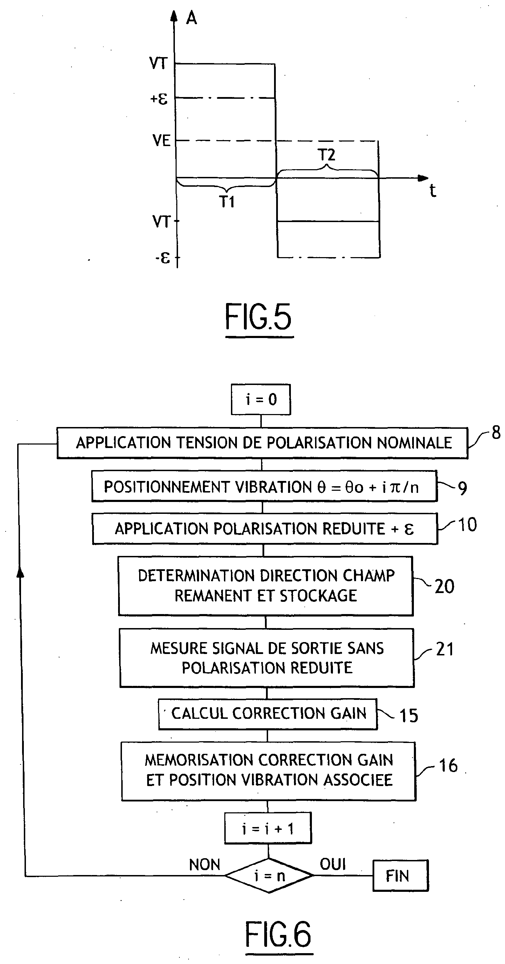

Tandis que la tension de polarisation réduite + ε est appliquée, il est procédé à une mesure (11) du signal de sortie et à un stockage de celui-ci. Le signal de sortie de l'organe capacitif résulte de la modulation par l'entrefer entre les électrodes de la tension de polarisation totale VT qui, comme il est illustré sur la figure 5, est la somme algébrique de la tension de polarisation VE équivalente au champ rémanent présent et de la tension de polarisation réduite +ε. La mesure du signal de sortie est effectuée pendant une période de temps T1.

Selon le mode de mise en oeuvre préféré illustré par la figure 3 le procédé comporte en outre une étape (12) d'application d'une tension de polarisation continue réduite -ε, c'est-à-dire une tension de polarisation de même valeur que la tension de polarisation réduite +ε mais de signe opposé. Une mesure (13) du signal de sortie correspondant est effectuée pendant une période de temps T2 égale à la période de temps T1.

Une moyenne (14) du signal de sortie est alors calculée sur les périodes de temps T1 + T2. Les composants du signal de sortie correspondant à la tension de polarisation réduite +ε et à la tension de polarisation réduite -ε s'annulent donc de sorte que la moyenne est représentative du champ rémanent seul. La moyenne ainsi calculée peut donc être directement utilisée pour un calcul de correction de gain (15). La correction de gain ainsi calculée et la position de la vibration associée sont mémorisées comme illustré par le bloc 16 sur la figure 3.

Comme également illustré par la figure 3 ces étapes sont répétées pour n positions de la vibration décalées angulairement de π/n, n étant déterminé en fonction de la finesse de correction que l'on souhaite réaliser.

Lors d'une phase d'utilisation du gyroscope illustrée par la figure 4, le procédé comporte une première étape 17 de détection de la détection la position de la vibration suivie d'une étape 18 de recherche de la correction de gain correspondante puis d'une étape 19 d'application de la correction de gain. Lorsque la position de la vibration est dans une position intermédiaire entre des positions pour lesquelles une correction de gain a été mémorisée, on peut soit appliquer la correction de gain de la position mémorisée la plus proche, soit effectuer une moyenne des corrections de gains associée à deux positions mémorisées encadrant la position de la vibration.

En référence à la figure 6, dans le second mode de mise en oeuvre du procédé selon l'invention, celui-ci comporte de même que précédemment une première étape 8 d'application ponctuelle de la tension de polarisation nominale suivie d'une étape 9 de positionnement de la vibration et de l'étape 10 d'application d'une tension de polarisation réduite + ε. Dans ce mode de mise en oeuvre, la tension de polarisation réduite est supérieure à la tension de polarisation estimée VE équivalente au champ rémanent. La mesure du signal de sortie de l'organe capacitif 11 sert cette fois à déterminer dans une étape 20 la direction seulement du champ rémanent et mémoriser cette direction. Cette étape de détermination de direction du champ rémanent est suivie d'une étape 21 de mesure du signal de sortie de l'organe capacitif sans application d'une polarisation réduite. L'étape de calcul 15 de la correction de gain est alors réalisée en utilisant d'une part la direction du champ rémanent pour déterminer le signe de la correction, et d'autre part la mesure du signal de sortie sans polarisation réduite pour déterminer la valeur de la correction de gain. La correction de gain et la position de la vibration associée sont mémorisées dans une étape 16 comme précédemment.

Selon une variante de ce second exemple de mise en oeuvre du procédé selon l'invention, la valeur du champ rémanent peut être effectuée à partir de la mesure du signal de sortie de l'organe capacitif effectuée en maintenant la polarisation réduite. Pour obtenir la valeur de la correction destinée à compenser le champ rémanent, il est alors nécessaire de soustraire de la mesure du signal de sortie la composante du signal de sortie résultant directement de la tension de polarisation réduite en calculant cette composante à partir de la tension de polarisation et du gain avant correction de l'organe capacitif. Toutefois, il convient de noter que l'élaboration de la tension de polarisation réduite est affectée d'une erreur qui fausse de façon correspondante la détermination de la composante résultant du champ rémanent. Comme illustré par la figure 6 il est donc préférable de déterminer la direction du champ rémanent en appliquant une tension de polarisation réduite, et de mesurer de façon indépendante la valeur du champ rémanent par une mesure du signal de sortie sans tension de polarisation réduite. On notera à ce propos que les étapes de détermination de la direction du champ rémanent et de mesure de la valeur du champ rémanent peuvent être effectuées dans un ordre quelconque.

Bien entendu, l'invention n'est pas limitée au mode de mise en oeuvre décrit et on peut y apporter des variantes de réalisation sans sortir du cadre de l'invention tel que défini par les revendications.

En particulier, bien que l'invention ait été décrite en relation avec un gyroscope vibrant axisymétrique comportant plusieurs organes capacitifs, l'invention s'applique également à un dispositif comportant un seul organe capacitif pour lequel on souhaite assurer une correction de gain.

## Revendications

1. Procédé de correction de gain d'un organe capacitif comprenant des électrodes mobiles l'une par rapport à l'autre, et entre lesquelles un champ rémanent est établi, **caractérisé en ce qu'**il comporte les étapes :
- d'appliquer à l'une des électrodes une tension de polarisation continue réduite (10) ayant une valeur inférieure à un seuil pour lequel un champ rémanent généré par cette tension de polarisation réduite peut être mesuré,
- d'effectuer une mesure d'un signal de sortie (11) de l'organe capacitif, le signal de sortie comprenant deux composantes qui s'additionnent, une première composante résultant d'une tension de polarisation équivalente au champ rémanent présent et une deuxième composante résultant directement de la tension de polarisation réduite, et
- d'effectuer un calcul d'une correction (15) du gain de l'organe capacitif en fonction du signal de sortie mesuré.

2. Procédé selon la revendication 1, **caractérisé en ce que** la tension de polarisation réduite (10,12) est supérieure à une tension de polarisation estimée (VE) équivalente au champ rémanent.

3. Procédé selon la revendication 2, **caractérisé en ce que** le calcul de la correction de gain comprend une étape (20) de détermination de direction du champ rémanent à partir d'une mesure du signal de sortie de l'organe capacitif (11) avec application d'une tension de polarisation réduite et une étape (21) de détermination de valeur du champ rémanent à partir d'une mesure du signal de sortie de l'organe capacitif (11) sans application d'une tension de polarisation réduite.

4. Procédé selon la revendication 2, **caractérisé en ce que** le calcul de la correction de gain comporte l'étape de soustraire du signal de sortie une composante résultant directement de la tension de polarisation réduite.

5. Procédé selon la revendication 1, **caractérisé en ce qu'**il comporte les étapes (11,13) d'effectuer successivement deux mesures du signal de sortie pour des tensions de polarisation réduites de mêmes valeurs mais de signes opposés, et d'effectuer une moyenne (14) des signaux de sortie obtenus.

6. Procédé selon la revendication 1, **caractérisé en ce qu'**il comporte une étape préalable (8) d'application d'une tension de polarisation nominale.

7. Procédé selon la revendication 1, **caractérisé en ce qu'**il comporte une phase d'initialisation et de mémorisation de la correction de gain, suivie d'une phase d'application de la correction.

8. Procédé selon la revendication 7, en relation avec un organe capacitif incorporé à un gyroscope vibrant axisymétrique, générant une vibration pouvant être amenée dans des positions diverses **caractérisé en ce que** des corrections de gains sont effectuées pour plusieurs positions de la vibration.

9. Dispositif de correction de gain d'un organe capacitif comprenant des électrodes mobiles l'une par rapport à l'autre et des moyens pour appliquer un signal de polarisation à l'une des électrodes, **caractérisé en ce qu'**il comporte des moyens pour appliquer à l'une des électrodes une tension de polarisation continue réduite (10) ayant une valeur inférieure à un seuil pour lequel un champ rémanent généré par cette tension de polarisation réduite peut être mesuré, des moyens pour effectuer une mesure d'un signal de sortie de l'organe capacitif, le signal de sortie comprenant deux composantes qui s'additionnent, une première composante résultant d'une tension de polarisation équivalente au champ rémanent présent et une deuxième composante résultant directement de la tension de polarisation réduite, et des moyens pour corriger le gain de l'organe capacitif en fonction du signal de sortie mesuré.

10. Dispositif selon la revendication 9, **caractérisé en ce qu'**il est incorporé à un gyroscope vibrant axisymétrique générant une vibration pouvant être amenée dans des positions diverses, le dispositif comportant des moyens pour mémoriser des corrections de gains pour plusieurs positions de la vibration.

## Patentansprüche

1. Verfahren zur Korrektur einer Verstärkung eines kapazitiven Elements, das zueinander bewegliche Elektroden umfasst, zwischen denen ein remanentes Feld erzeugt wird, **dadurch gekennzeichnet, dass** es die Schritte umfasst:
- Anlegen einer reduzierten Polarisationsgleichspannung (10) an einer der Elektroden, wobei die Spannung einen Wert hat, der kleiner als ein Schwellenwert ist, für den ein remanentes Feld, das durch diese reduzierte Polarisationsgleichspannung erzeugt wird, gemessen werden kann,
- Messen eines Ausgangssignals (11) des kapazitiven Elements, wobei das Ausgangssignal zwei Komponenten umfasst, die sich addieren, wobei eine erste Komponente aus einer Polarisationsspannung resultiert, die äquivalent zu dem vorhandenen remanenten Feld ist, und eine zweite Komponente direkt aus der reduzierten Polarisationsspannung resultiert, und
- Berechnen einer Korrektur (15) der Verstärkung des kapazitiven Elements in Abhängigkeit von dem gemessenen Ausgangssignal.

2. Verfahren nach Anspruch 1, **dadurch gekennzeichnet, dass** die reduzierte Polarisationsspannung (10, 12) größer als eine geschätzte Polarisationsspannung (VE) ist, die äquivalent zu dem remanenten Feld ist.

3. Verfahren nach Anspruch 2, **dadurch gekennzeichnet, dass** die Berechnung der Korrektur der Verstärkung einen Schritt (20) des Bestimmens der Richtung des remanenten Feldes anhand einer Messung des Ausgangsignals des kapazitiven Elements (11) bei Anlegen einer reduzierten Polarisationsspannung und einen Schritt (21) des Bestimmens des Wertes des remanenten Feldes anhand einer Messung des Ausgangssignals des kapazitiven Elements (11) ohne Anlegen einer reduzierten Polarisationsspannung umfasst.

4. Verfahren nach Anspruch 2, **dadurch gekennzeichnet, dass** die Berechnung der Korrektur der Verstärkung den Schritt des Subtrahierens einer Komponente, die direkt aus der reduzierten Polarisationsspannung resultiert, von dem Ausgangssignal umfasst.

5. Verfahren nach Anspruch 1, **dadurch gekennzeichnet, dass** es die Schritte (11, 13) des Durchführens von zwei aufeinanderfolgenden Messungen des Ausgangssignals für reduzierte Polarisationsspannungen mit gleichen Werten, aber entgegengesetzten Vorzeichen und des Bildens eines Mittelwertes (14) der erhaltenen Ausgangssignale umfasst.

6. Verfahren nach Anspruch 1, **dadurch gekennzeichnet, dass** es einen vorhergehenden Schritt (8) des Anlegens einer nominalen Polarisationsspannung umfasst.

7. Verfahren nach Anspruch 1, **dadurch gekennzeichnet, dass** es eine Initialisierungs- und Verstärkungskorrekturspeicherungsphase gefolgt von einer Phase der Anwendung der Korrektur umfasst.

8. Verfahren nach Anspruch 7, im Zusammenhang mit einem kapazitiven Element, das in einem achsensymmetrischen Vibrationskreisel aufgenommen ist, der eine Schwingung erzeugt, die in unterschiedliche Positionen gebracht werden kann, **dadurch gekennzeichnet, dass** die Verstärkungskorrekturen für mehrere Positionen der Schwingung durchführt werden.

9. Vorrichtung zur Korrektur einer Verstärkung eines kapazitiven Elements, das zueinander bewegliche Elektroden und Mittel umfasst, um ein Polarisationssignal an einer der Elektroden anzulegen, **dadurch gekennzeichnet, dass** sie Mittel umfasst, um an einer der Elektroden eine reduzierte Polarisationsgleichspannung (10) anzulegen, die einen Wert hat, der kleiner als ein Schwellenwert ist, für den ein remanentes Feld, das durch diese reduzierte Polarisationsspannung erzeugt wird, gemessen werden kann, Mittel zum Messen eines Ausgangssignals des kapazitiven Elements, wobei das Ausgangssignal zwei Komponenten umfasst, die sich addieren, wobei eine erste Komponente aus einer Polarisationsspannung resultiert, die äquivalent zu dem vorhandenen remanenten Feld ist, und eine zweite Komponente direkt aus der reduzierten Polarisationsspannung resultiert, sowie Mittel zum Korrigieren der Verstärkung des kapazitiven Elements in Abhängigkeit von dem gemessenen Ausgangssignal.

10. Vorrichtung nach Anspruch 9, **dadurch gekennzeichnet, dass** sie in einem achsensymmetrischen Vibrationskreisel aufgenommen ist, der eine Schwingung erzeugt, die in unterschiedliche Positionen gebracht werden kann, wobei die Vorrichtung Mittel zum Speichern der Verstärkungskorrekturen für mehrere Positionen der Schwingung umfasst.

## Claims

1. Method of correcting the gain of a capacitive member comprising electrodes mobile relative to one another and between which a remanent field is established, **characterized in that** it includes the steps of:
- applying to one of the electrodes a reduced DC bias voltage (10) having a value below a threshold for which a remanent field generated by this reduced bias voltage can be measured,
- measuring an output signal (11) of the capacitive member, the output signal comprising two components that add, a first component resulting from a bias voltage equivalent to the remanent field present and a second component resulting directly from the reduced bias voltage, and
- calculating a correction (15) for the gain of the capacitive member as a function of the measured output signal.

2. Method according to claim 1, **characterized in that** the reduced bias voltage (10, 12) is greater than an estimated bias voltage (VE) equivalent to the remanent field.

3. Method according to claim 2, **characterized in that** the calculation of the gain correction comprises a step (20) of determining the direction of the remanent field from a measurement of the output signal of the capacitive member (11) when a reduced bias voltage is applied and a step (21) of determining the value of the remanent field from a measurement of the output signal of the capacitive member (11) when no reduced bias voltage is applied.

4. Method according to claim 2, **characterized in that** the calculation of the gain correction includes the step of subtracting from the output signal a component that results directly from the reduced bias voltage.

5. Method according to claim 1, **characterized in that** it includes the steps (11, 13) of effecting two successive measurements of the output signal for reduced bias voltages having the same values but opposite signs and taking the average of the output signals (14) obtained.

6. Method according to claim 1, **characterized in that** it includes a prior step (8) of applying a nominal bias voltage.

7. Method according to claim 1, **characterized in that** it includes an initialization and gain correction storage phase followed by a phase of applying the correction.

8. Method according to claim 7, used with a capacitive member incorporated in an axisymmetric vibrating gyroscope, generating a vibration that can be applied at various positions, **characterized in that** gain corrections are effected at a plurality of positions of the vibration.

9. Device for correcting the gain of a capacitive member comprising electrodes mobile relative to one another and means for applying a bias signal to one of the electrodes, **characterized in that** it includes means for applying to one of the electrodes a reduced DC bias voltage (10) having a value that is below a threshold for which a remanent field generated by this reduced bias voltage can be measured, means for measuring an output signal of the capacitive member, the output signal comprising two components that add, a first component resulting from a bias voltage quivalent to the remanent field present and a second component resulting directly from the reduced bias voltage, and means for correcting the gain of the capacitive member as a function of the measured output signal.

10. Device according to claim 9, **characterized in that** it is incorporated in an axisymmetric vibrating gyroscope that generates a vibration that can be applied at various positions, the device including means for storing gain corrections for a plurality of positions of the vibration.
